Europäisches Patentamt

European Patent Office

Office européen des brevets

(11) Veröffentlichungsnummer: **0 442 090 A1**

## (12) EUROPÄISCHE PATENTANMELDUNG

(21) Anmeldenummer: 90124340.2

(22) Anmeldetag: 15.12.90

(51) Int. Cl.⁵: **B60T 8/48**

(30) Priorität: 10.02.90 DE 4004123

(43) Veröffentlichungstag der Anmeldung:
21.08.91 Patentblatt 91/34

(84) Benannte Vertragsstaaten:
DE FR GB IT SE

(71) Anmelder: **ROBERT BOSCH GmbH**
**Postfach 10 60 50**
**W-7000 Stuttgart 10(DE)**

(72) Erfinder: **Kirstein, Lothar, Dipl.-Ing.**
**Leiterweg 51**
**W-7257 Ditzingen(DE)**

(54) **Hydraulische Zweikreisbremsanlage.**

(57) Eine hydraulische Zweikreisanlage mit diagonaler Bremskreisaufteilung, Blockierschutzsystem (ABS) und Antriebsschlupfregelung (ASR) für Kraftfahrzeuge weist ein Vierkanal-Hydroaggregat (16) mit Steuerventilen (25-28) und Rückförderpumpe (29) auf. Zur Realisierung der ASR-Funktion ist an der Rückförderpumpe (29) ein drittes, als Hochdruckpumpe ausgebildetes selbstansaugendes Pumpenelement (45) gemeinsam mit dieser angetrieben, und die Radbremszylinder (10) der beiden Antriebsräder (HR,HL) sind zusätzlich - unter Umgehung der Steuerventile (26,27) - über eine Magnetventilanordnung (31) an dem dritten Pumpenelement (45) angeschlossen. Bei Durchdrehen mindestens eines der Antriebsräder (HR,HL) wird das dritte Pumpenelement (45) aktiviert, die Magnetventilanordnung (31) umgeschaltet und das Steuerventil (26,27) für das schlüpfende Antriebsrad auf "Druckhalten" geschaltet. Der von dem Pumpenelement (45) erzeugte Bremsdruck wird damit in den Radbremszylinder (10) des durchdrehenden Antriebsrades (HR,HL) eingesteuert und das durchdrehende Antriebsrad (HR,HL) abgebremst.

Fig. 1

## HYDRAULISCHE ZWEIKREISBREMSANLAGE

Stand der Technik

Die Erfindung geht aus von einer hydraulischen Zweikreisbremsanlage mit diagonaler Bremskreisaufteilung, Blockierschutzsystem (ABS) und Antriebsschlupfregelung (ASR) für Kraftfahrzeuge, insbesondere Pkw, der im Oberbegriff des Anspruchs 1 definierten Gattung.

Ein Vierkanal-Hydroaggregat für diagonale Bremskreisaufteilung der Zweikreisbremsanlagen mit Blockierschutz, auch Antiblockiersystem (ABS) genannt, ist aus "Bosch, Kraftfahrtechnisches Taschenbuch, VDI-Verlag, 1987, S. 530 und 531" bekannt. Die als 3/3-Wegemagnetventile ausgebildeten ABS-Steuerventile haben drei Stellungen. In der ersten, nicht erregten Stellung besteht ein ungehinderter Durchgang vom Hauptbremszylinder zu den Radbremszylindern, so daß beim Anbremsen der Radbremsdruck ansteigt. In der zweiten, mit halbem Maximalstrom erregten Stellung wird der Durchgang vom Hauptbremszylinder zu den Radbremszylindern unterbrochen, so daß der Radbremsdruck konstant gehalten wird. In der dritten, mit Maximalstrom erregten Stellung werden die Radbremszylinder mit dem Rücklauf verbunden, wobei pro Bremskreis die aus den Radbremszylindern abfließende Bremsflüssigkeit von der Rückförderpumpe in den Hauptbremszylinder zurückgefördert wird. Alle Magnetventile werden von einer ABS-Steuerelektronik entsprechend dem mittels Schlupfsensoren an den Rädern erfaßten Schlupf angesteuert, wobei im allgemeinen die Magnetventile für die Radbremszylinder der beiden Hinterräder gemeinsam angesteuert werden, so daß in den Hinterrädern derselbe Bremsdruck herrscht. Im Rücklauf sind üblicherweise kleine Bremsflüssigkeitsspeicher eingeschaltet, die beim Druckabbau vorübergehend ein Bremsflüssigkeitsvolumen von ca. 2 cm³ pro Bremskreis aufnehmen können.

In der DE 36 33 687 A1 ist eine hydraulische Zweikreisbremsanlage mit diagonaler Bremskreisaufteilung, Blockierschutzsystem (ABS) und Antischlupfregelung (ASR) für Kraftfahrzeuge der eingangs genannten Art bekannt, in welcher ein solches Vierkanal-Hydroaggregat eingesetzt ist (vergl. dort Fig. 3 und 8). Zur Realisierung der Antriebsschlupfregelung werden die als Tandemkolben ausgebildeten beiden Druckkolben eines Zusatzbremszylinders über eine Kolbenstange von einem Federspeicher betätigt, der bei Auftreten eines Radschlupfes an mindestens einem Antriebsrad entspannt wird, wobei die gespannte Rückstellfeder die Druckkolben verschiebt. Zugleich werden die beiden Zentralventile entweder hydraulisch (Fig. 3) oder elektrisch (Fig. 8) umgeschaltet und sperren die beiden Zylinderräume des Zusatzbremszylinders gegen den Hauptbremszylinder ab. Durch die beiden Druckkolben wird nunmehr Bremsdruck in die Radbremszylinder der Antriebsräder eingesteuert. Die Steuerelektronik steuert die Steuerventile, wobei das durchdrehende Antriebsrad soweit abgebremst wird, bis es schlupflos ist. Danach wird die in den Radbremszylinder eingesteuerte Bremsflüssigkeit durch das Pumpenelement der Rückförderpumpe in den Zylinderraum des Zusatzbremszylinders zurückgefördert. Die Spannung des Federspeichers erfolgt durch eine Niederdruckpumpe, die solange Bremsflüssigkeit in den Speicherraum des Federspeichers einpumpt, bis der Federspeicherkolben seine Endlage erreicht hat und einen im Stromkreis der Niederdruckpumpe liegenden Schalter öffnet.

Aus der DE 30 21 116 A1 ist bereits eine Zweikreisbremsanlage mit einer Bremskreisaufteilung "vorne-hinten", einem Blockierschutzsystem und einer Antriebschlupfregelung bekannt, bei welcher die Rückförderpumpe insgesamt drei getrennte Pumpenelemente aufweist. Zwei Pumpenelemente dienen zum Rückfördern der Bremsflüssigkeit aus den Radbremszylindern in den Hauptbremszylinder zwecks Bremsdruckabbau beim normalen Bremsvorgang, während das dritte Pumpenelement die Bremsdruckversorgung bei der Antriebsschlupfregelung sicherstellt. Hierzu ist das dritte Pumpenelement eingangsseitig mit dem Bremsflüssigkeitsspeicher am Hauptbremszylinder und ausgangsseitig mit einem Druckspeicher verbunden. Der im Druckspeicher aufgebaute Bremsflüssigkeitsdruck steht über ein 3/2-Wegeventil mit hydraulischem Steuereingang an dem hier als 3/2-Wegemagnetventil ausgebildeten ABS-Steuerventil für die angetriebenen Hinterräder an, und zwar so, daß in der erregten Bremsdruckabbaustellung des ABS-Steuerventils dieser Druck in die Radbremszylinder eingesteuert wird. Beim Bremsvorgang wird das 3/2-Wegeventil durch den vom Hauptbremszylinder erzeugten Bremsdruck umgeschaltet, so daß die Verbindung zwischen Druckspeicher und Steuerventil abgesperrt ist. Bei unbetätigter Bremse und bei Auftreten eines Radschlupfes an mindestens einem der Antriebsräder wird das Steuerventil umgeschaltet, so daß die Radbremszylinder über das 3/2-Wegeventil an dem Druckspeicher angeschlossen werden. Damit nur das Antriebsrad abgebremst wird, an dem der Antriebsschlupf sensiert wird, ist zwischen dem Ausgang des Steuerventils und dem Radbremszylinder jeweils ein 2/2- Wegemagnetventil eingeschaltet. Die Steuerelektronik schaltet dasjenige 2/2-Wegemagnetventil um, das demjenigen Antriebsrad zugeordnet ist, das keinen Schlupf zeigt. Der Radbremszylinder dieses Antriebsrades wird damit von dem Druckspeicher abgekoppelt, so daß der Druckkaufbau nur in dem Radbremszylinder des schlüpfenden Antriebsrads erfolgt.

Vorteile der Erfindung

Die erfindungsgemäße hydraulische Zweikreisbremsanlage mit den kennzeichnenden Merkmalen des Anspruchs 1 hat den Vorteil, daß bei einer Zweikreisbremsanlage mit diagonaler Bremskreisaufteilung, bei welcher die Antriebsräder verschiedenen Bremskreisen angehören, ähnlich wie bei einer Zweikreisbremsanlage mit einer Bremskreisaufteilung "vorne-hinten", bei welcher die Antriebsräder demselben Bremskreis angehören, die Bremsdruckversorgung für ASR-Betrieb mit relativ geringem Aufwand realisiert werden kann. Das als selbstansaugende Hochdruckpumpe ausgebildete dritte Pumpenelement der Rückförderpumpe speist im ASR-Betrieb über ein Druckbegrenzungsventil und die Magnetventilanordnung unmittelbar in die Radbremszylinder der Antriebsräder ein. Die geschlossenen Bremskreise mit ihrer bekannten Zuverlässigkeit bleiben durch die Integrierung der Antriebsschlupfregelung (ASR) unangetastet. Die Hochdruckpumpe erzeugt vorzugsweise nur bei ASR einen Bremsversorgungsdruck und greift nicht in das ABS ein. Gegenüber der bekannten ASR bei einer Zweikreisbremsanlage mit diagonaler Bremskreisaufteilung, bei welcher die Bremsdruckversorgung über einen Zusatzbremszylinder erfolgt, treten auch keine Hystereseprobleme auf. Durch die direkte Einspeisung des Bremsdrucks im ASR-Fall in die Radbremszylinder wird eine Reihenschaltung von Steuerventilen und Magnetventilanordnung mit den bekannten Druckgradienten-Problemen vermieden.

Durch die in den weiteren Ansprüchen aufgeführten Maßnahmen sind vorteilhafte Weiterbildungen und Verbesserungen der im Anspruch 1 angegebenen Zweikreisbremsanlage möglich.

Die Bremsdruckversorgung durch die Hochdruckpumpe nur bei ASR wird gemäß einer vorteilhaften Ausführungsform der Erfindung dadurch realisiert, daß zwischen dem Ausgang und dem Eingang der Hochdruckpumpe ein elektromagnetisch betätigtes Umschaltventil angeschlossen ist, das das Druckbegrenzungsventil in seiner unerregten Grundstellung überbrückt und nur in seiner erregten Arbeitsstellung wirksam werden läßt. Dadurch fördert die auch im ABS-Betrieb mit angetriebene Hochdruckpumpe in der Grundstellung des Umschaltventils im drucklosen Umlauf und erzeugt nur nach Umschalten des Umschaltventils bei Antriebsschlupfregelung (ASR) den Bremshochdruck.

Die Magnetventilanordnung kann durch zwei 2/2-Wegemagnetventilen oder durch ein 3/3-Wegemagnetventil realisiert werden. In beiden Fällen werden die Magnetventile bei Antriebsschlupfregelung zusammen mit den den Antriebsrädern zugeordneten Steuerventilen und dem Umschaltventil von der Steuerelektronik angesteuert, die auch den Elektromotor zum Antrieb der Hochdruckpumpe einschaltet.

Im Falle des 3/3-Wegemagnetventils wird zweckmäßigerweise zwischen Ausgang der Hochdruckpumpe und 3/3-Wegemagnetventil ein Rückschlagventil mit vorgegebenem Öffnungsdruck eingeschaltet, damit im ABS-Betrieb die Hochdruckpumpe nicht zum 3/3-Wegemagnetventil sondern in den drucklosen Umlauf fördert.

Zeichnung

Die Erfindung ist anhand eines in der Zeichnung dargestellten Ausführungsbeispiels in der nachfolgenden Beschreibung näher erläutert. Es zeigen:

Fig. 1    ein Blockschaltbild einer Zweikreisbremsanlage mit diagonaler Bremskreisaufteilung, Blockierschutzsystem und Antriebsschlupfregelung für einen Personenkraftwagen,

Fig. 2    ausschnittweise eine Blockschaltbild der Zweikreisbremsanlage gemäß einem weiteren Ausführungsbeispiel.

Beschreibung der Ausführungsbeispiele

Die in der Zeichnung im Blockschaltbild dargestellte hydraulische Zweikreisbremsanlage mit diagonaler Bremskreisaufteilung, Blockierschutzsystem (ABS) und Antriebsschlupfregelung (ASR), auch Vortriebsregelung genannt, ist für vorder- und hinterradgetriebene Kraftfahrzeuge geeignet und hier am Beispiel eines hinterradgetriebenen Personenkraftwagens erläutert. Die Räder des Kraftfahrzeugs sind mit VL (vorne links) HR (hinten rechts), HL (hinten links) und VR (vorne rechts) bezeichnet. Die diesen Rädern zugeordneten Radbremszylinder sind mit 10 bezeichnet. Die Radbremszylinder 10 der Räder VL und HR einerseits und die Radbremszylinder der Räder HL und VR andererseits sind jeweils in einem Bremskreis angeordnet.

Zu der Zweikreisbremsanlage gehört in an sich bekannter Weise ein Hauptbremszylinder 11 , mit oder ohne Unterdruckverstärker 37, der zwei getrennte Bremskreisausgänge 12,13 zum Anschließen jeweils eines der beiden Bremskreise aufweist und mit einem Bremsflüssigkeitsbehälter 14 in Verbindung steht. Bei Betätigen eines Bremspedals 15 wird ein gleich großer Bremsdruck über die beiden Bremskreisausgänge 12,13 in den Bremskreisen ausgesteuert.

Zu der Zweikreisbremsanlage gehört ferner ein Vierkanal-Hydroaggregat 16, das zwei Einlaßkanäle 17,18 und vier Auslaßkanäle 21 - 24 besitzt. Die beiden Einlaßkanäle 17,18 sind über Versorgungsleitungen 19,20 an die beiden Bremskreisausgänge 12,13 des Hauptbremszylinders 11 angeschlossen, während die Radbremszylinder 10 über Bremsleitungen mit den Auslaßkanälen 21 - 24 verbunden sind. Jedem Auslaßkanal 21 - 24 ist ein als 3/3-Wegemagnetventil mit Federrückstellung ausgebildetes Steuerventil 25 - 28 zugeordnet, das von einer Steuerelektronik 30 in bekannter Weise in Abhängigkeit von einem am zugeordneten Rad sensierten Schlupf gesteuert wird und damit einen vom Radschlupf abhängigen Bremsdruck in dem zugeordneten Radbremszylinder 10 aufbaut. Jeweils zwei Steuerventile 25,26 bzw. 27,28 sind an einem Einlaßkanal 17 bzw. 18 angeschlossen und gehören damit dem gleichen Bremskreis an.

Zum Vierkanal-Hydroaggregat 16 gehört ferner eine Rückförderpumpe 29, die zwei separate Pumpenelemente 43,44 aufweist, die gemeinsam von einem Elektromotor 46 angetrieben werden. Die Pumpenelemente 43 und 44 dienen zum Rückfördern von Bremsflüssigkeit beim Bremsdruckabbau in den Radbremszylindern 10 zum Hauptbremszylinder 11 , und zwar jeweils in einem Bremskreis. Hierzu sind die Pumpenelemente 43,44 jeweils eingangsseitig über ein Pumpeneinlaßventil 49 und eine Rückführleitung 47 bzw. 48 an den beiden Steuerventilen 25,26 bzw. 27,28 der beiden Bremskreise und ausgangsseitig über ein Pumpenauslaßventil 50 an dem zugeordneten Einlaßkanal 17 bzw. 18 angeschlossen. Zur Volumenaufnahme von Bremsflüssigkeit aus den Radbremszylindern 10 beim Bremsdruckabbau sind Niederdruckspeicher 51 in den Rückführleitungen 47,48 eingeschaltet. Die Steuerventile 25 - 28 sind in bekannter Weise so ausgebildet, daß in ihrer ersten, nicht erregten Stellung ein ungehinderter Durchgang vom Einlaßkanal 17 bzw. 18 zu den Auslaßkanälen 21 - 24 besteht. In der zweiten, mit halbem Maximalstrom erregten Stellung wird dieser Durchgang unterbrochen, so daß der in den Radbremszylindern 10 eingesteuerte Bremsdruck konstant gehalten wird. In der dritten, mit Maximalstrom erregten Stellung werden die Auslaßkanäle 21 - 24, und damit die Radbremszylinder 10, mit den Rückführleitungen 47 und 48 verbunden, wobei die Bremsflüssigkeit aus den Radbremszylindern 10 sich in die Niederdruckspeicher 51 entspannt. Zum schnellen Druckabbau sind den den Auslaßkanälen 21 ,24 für die Radbremszylinder 10 der nicht angetriebenen Räder VL,VR zugeordneten Steuerventilen 25,28 Rückschlagventile 36 parallel geschaltet. Aus Gründen des Bremsdruckaufbaus bei der noch zu beschreibenden Antriebsschlupfregelung (ASR) fehlen diese Rückschlagventile an den Steuerventilen 26,27 für die Antriebsräder HR,HL.

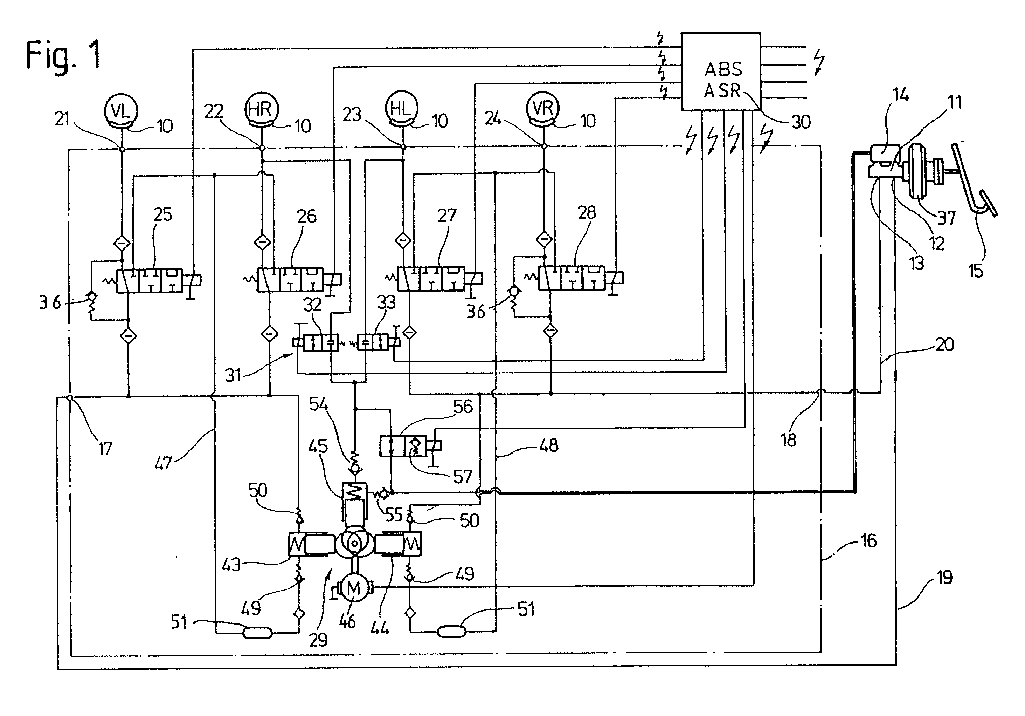

An der Rückförderpumpe 29 ist ein drittes Pumpenelement 45 angeordnet, das gemeinsam mit den beiden Pumpenelementen 43,44 von dem Elektromotor 46 angetrieben wird. Dieses ist als selbstansaugende Hochdruckpumpe ausgebildet und eingangsseitig über ein Pumpeneinlaßventil 55 an dem Bremsflüssigsbehälter 14 und ausgangsseitig über ein Pumpenauslaßventil 54 und eine Magnetventilanordnung 31 an den Auslaßkanälen 22,23 für die Radbremszylinder 10 der Antriebsräder HR,HL angeschlossen. Pumpenein- und -auslaßventil 55,54 der Hochdruckpumpe 45 sind über ein als 2/2-Wegemagnetventil mit Federrückstellung ausgebildetes Umschaltventil 56 miteinander verbunden, das von der Steuerelektronik 30 angesteuert wird. Das Umschaltventil 56 ist so ausgebildet, daß es in seiner unerregten Grundstellung einen ungehinderten Durchfluß zwischen Pumpenein- und -auslaßventil 55,54 ermöglicht und in seiner erregten Arbeitsstellung dazwischen ein Druckbegrenzungsventil 57 einschaltet. Dieses Druckbegrenzungsventil 57 begrenzt den Druck der Hochdruckpumpe auf ca. 100 bar. Das Druckbegrenzungsventil 57 kann dabei - wie in Fig. 1 dargestellt - in dem Umschaltventil 56 integriert sein oder aber dem Umschaltventil 56 parallel geschaltet sein. Dann trennt das Umschaltventil 56 lediglich die in der stromlosen Ruhestellung bestehende Verbindung zwischen Ventilein- und -ausgang auf. Die Magnetventilanordnung 31 besteht aus zwei 2/2-Wegemagnetventilen 32,33 mit Federrückstellung, von denen jeweils eines einem Auslaßkanal 22 bzw. 23 für die Radbremszylinder 10 der Antriebsräder HR und HL zugeordnet ist. Von jedem 2/2-Wegemagnetventil 32 bzw. 33 ist jeweils ein Arbeitsanschluß mit dem zugeordneten Auslaßkanal 22 bzw. 23 verbunden. In der erregten Arbeitsstellung der 2/2-Wegemagnetventile 32,33 besteht ein ungehinderter Durchfluß von der Hochdruckpumpe 45 zu den Auslaßkanälen 22,23, in der unerregten Grundstellung ist dieser Durchgang gesperrt. Die beiden 2/2-Wegemagnetventile 32,33 werden von der Steuerelektronik 30 dann angesteuert, wenn an dem jeweiligen Antriebsrad HR,HL ein Radschlupf sensiert wird.

Die Wirkungsweise des Blockierschutzsystems in der beschriebenen Zweikreisbremsanlage ist bekannt und wird hier nicht weiter ausgeführt. Die Wirkungsweise der Antriebsschlupfregelung ist wie folgt: Dreht mindestens eines der beiden Antriebsräder HL oder HR durch, so wird dies über nicht näher gezeigte Raddrehzahlfühler oder Schlupfsensoren des Blockierschutzsystems der Steuerelektronik 30 mitgeteilt, welche die automatische Antriebsschlupfregelung in Gang setzt. Hierbei wird ein Schaltsignal an das Umschaltventil 56 abgegeben, welches das Druckbegrenzungsventil 57 zwischen Pumpenein- und -auslaßventil 55,54 der Hochdruckpumpe 45 einschaltet. Die Hochdruckpumpe 45 wird eingeschaltet und erzeugt einen Bremsflüssigkeitsdruck, der durch das Druckbegrenzungsventil 57 auf ca. 100 bar begrenzt wird. Dieser Bremsflüssigkeitsdruck steht an den 2/2-Wegemagnetventilen 32,33 an. Schlüpft nur eines der beiden Antriebsräder, z.B. das Hinterrad HR, so wird von der Steuerelektronik 30 das 2/2-Wegemagnetventil 32, das dem Auslaßkanal 22 für den Radbremszylinder 10 des schlüpfenden Antriebsrads HR zugeordnet ist, umgeschaltet und gleichzeitig das diesem Auslaßkanal 22 zugeordnete Steuerventil 26 in seine Mittelstellung überführt. Von der Hochdruckpumpe 46 wird nunmehr Bremsdruck in den Radbremszylinder 10 des schlüpfenden Antriebsrades HR eingesteuert. Das andere 2/2-Wegemagnetventil 33, das dem Auslaßkanal 23 für den Radbremszylinder 10 des nicht schlüpfenden Antriebsrades HL zugeordnet ist, bleibt von der Steuerelektronik 30 ebenso wie die übrigen Steuerventile 25,27,28 unbeeinflußt. Die Bremsdruckregelung am schlüpfenden Antriebsrad HR erfolgt durch Umschaltung des Steuerventils 26 aus seiner Mittelstellung in seine Endstellung und umgekehrt, wobei in der Endstellung ein zu hoher Bremsdruck über den Niederdruckspeicher 51 abgebaut wird. Beim Druckabbau oder Druckhalten wird auch zugleich das 2/2-Wegemagnetventil 32 in seine Sperrstellung umgeschaltet.

Am Ende der Antriebsschlupfregelung, wenn das durchdrehende Antriebsrad HR soweit abgebremst ist, daß kein Antriebsschlupf mehr sensiert wird, wird von der Steuerelektronik 30 das Steuerventil 26 in seiner Mittelstellung gehalten und das 2/2-Wegemagnetventil 32 in seine Sperrstellung zurückgeschaltet. Gleichzeitig fällt die Erregung des Umschaltventils 56 weg, so daß Pumpeneinlaß und -auslaßventil 55,54 der Hochdruckpumpe 45 wieder miteinander verbunden sind und letztere drucklos geschaltet ist. Ein Bremsvorgang während der ASR-Regelung ist möglich, da die Radbremszylinder 10 aller Räder HR,HL VL,VR über die ABS-Steuerventile 25 - 28 an dem Hauptbremszylinder 11 angeschlossen sind und damit die ASR-Regelung durch die ABS-Regelung "überfahren" wird. Der Bremsvorgang hat damit stets Priorität vor der Antriebsschlupfregelung.

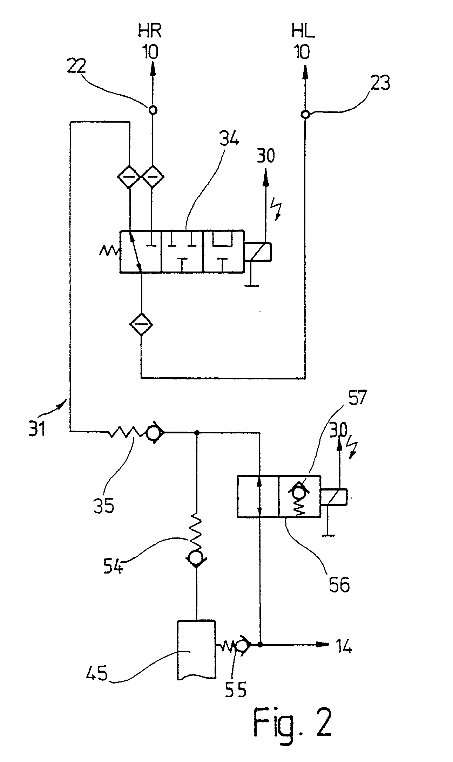

Bei der in Fig. 2 im Blockschaltbild ausschnittweise dargestellten modifizierten Zweikreisbremsanlage ist lediglich die Magnetventilanordnung 31 anders realisiert. Anstelle der beiden 2/2-Wegemagnetventile 32,33 in Fig. 1 ist hier ein einziges 3/3-Wegemagnetventil 34 mit Federrückstellung in Verbindung mit einem Rückschlagventil 35 verwendet, das wiederum von der Steuerelektronik 30 gesteuert wird. Von den drei Arbeitsanschlüssen des 3/3-Wegemagnetventils 34 ist der erste über das Rückschlagventil 35, das eine zum 3/3-Wegemagnetventil 34 hin gerichtete Durchflußrichtung aufweist, mit dem Ausgang des Pumpenauslaßventils 54, der zweite mit dem Auslaßkanal 22 für den Radbremszylinder 10 des Antriebsrades HR und der dritte mit dem Auslaßkanal 23 für den Radbremszylinder 10 des Antriebsrades HL verbunden. Das 3/3-Wegemagnetventil 34 ist so ausgebildet, daß der erste Arbeitsanschluß in der unerregten Grundstellung mit dem zweiten Arbeitsanschluß (Auslaßkanal 22) und in seiner durch Maximalstromerregung herbeigeführten Endstellung mit dem dritten Arbeitsanschluß (Auslaßkanal 23) verbunden ist. In der durch Erregung mit halbem Maximalstrom herbeigeführten Mittelstellung sind alle Arbeitsanschlüsse abgesperrt. Das Rückschlagventil 35 ist auf einen vorgegebenen Öffnungsdruck eingestellt und stellt sicher, daß im ABS-Betrieb das von dem Elektromotor 46 mit angetriebene dritte Pumpenelement (Hochdruckpumpe 45) nicht zum 3/3-Wegemagnetventil 34 fördert, sondern in den drucklosen Umlauf über das Umschaltventil 56. Bei Wegfall des Rückschlagventils 35 müßte das 3/3-Wegemagnetventil 34 im ABS-Betrieb auf seine Mittelstellung umgeschaltet werden.

Die Wirkungsweise der Zweikreisbremsanlage bei Antriebsschlupfregelung ist die gleiche wie zu Fig. 1 beschrieben. Je nachdem, welches Antriebsrad HR bzw. HL Antriebsschlupf zeigt, wird das 3/3-Wegemagnetventil 34 nicht oder mit Maximalstrom erregt. Der durch Ansteuerung des Umschaltventils 56 von der Hochdruckpumpe 45 erzeugte Bremsdruck gelangt damit in den Radbremszylinder 10 des durchdrehenden Antriebsrades HR bzw. HL, das dadurch abgebremst wird. Die Steuerventile 26 oder 27 werden wie beschrieben angesteuert. Zum Bremsdruckhalten wird das 3/3-Wegemagnetventil 34 in seine Mittelstellung überführt. Der Bremsdruckabbau erfolgt über die Steuerventile 26 oder 27.

Bei angetriebenen Vorderrädern sind die Auslaßkanäle 22 und 23 mit den Radbremszylindern 10 der Vorderräder VL und VR und die Auslaßkanäle 21 und 24 mit den Radbremszylindern 10 der Hinterräder HR und HL zu verbinden.

In einer vereinfachten Ausführung kann das Umschaltventil 56 durch ein fest eingebautes Druckbegrenzungsventil, das die Funktion des Druckbegrenzungsventils 57 übernimmt, ersetzt werden. Das Umschaltventil 56 mit der Möglichkeit des Kurzschließens des Druckbegrenzungsventils 57 in seiner unerregten Grundstellung hat jedoch den Vorteil, daß im ABS-Betrieb, in welchem die Rückförderpumpe 29 aktiviert wird, das mit dieser angetriebene dritte Pumpenelement 45 drucklos geschaltet ist.

**Patentansprüche**

1. Hydraulische Zweikreisbremsanlage mit diagonaler Bremskreisaufteilung, Blockierschutzsystem (ABS) und Antriebsschlupfregelung (ASR) für Kraftfahrzeuge, insbesondere Personenkraftwagen, mit einem zwei getrennte Bremskreisausgänge aufweisenden Hauptbremszylinder zum Aussteuern eines Bremsdrucks durch Bremspedalbetätigung, mit einem mit dem Hauptbremszylinder in Verbindung stehenden Bremsflüssigkeitsbehälter, mit einem Vierkanal-Hydroaggregat, das aufweist: zwei mit jeweils einem Bremskreisausgang des Hauptbremszylinders verbundene Einlaßkanäle, vier Auslaßkanäle zum Anschließen jeweils eines Radbremszylinders des Kraftfahrzeugs, vier jeweils einem Auslaßkanal zugeordnete, von einer Steuerelektronik gesteuerte 3/3-Wegemagnetventile zum Einsteuern eines radschlupfabhängigen Bremsdrucks in den jeweils zugeordneten Auslaßkanal, von denen jeweils zwei einem Bremskreis zugehörige Steuerventile an einem Einlaßkanal angeschlossen sind, und eine elektrisch angetriebene Rückförderpumpe, die zwei getrennte, jeweils in einem Bremskreis wirksame, jeweils eingangsseitig über die 3/3-Wegemagnetventile mit den Auslaßkanälen des zugeordneten Bremskreises verbindbare und ausgangsseitig mit dem zugehörigen Einlaßkanal verbundene Pumpenelemente zum Rückfördern von Bremsflüssigkeit aus den Radbremszylindern besitzt, dadurch gekennzeichnet, daß an der Rückförderpumpe (29) ein mit dieser angetriebenes drittes Pumpenelement (45) angeordnet ist, das als selbstansaugende Hochdruckpumpe ausgebildet und eingangsseitig an dem Bremsflüssigkeitsbehälter (14) angeschlossen und ausgangsseitig über eine Magnetventilanordnung (31) getrennt zu den beiden Auslaßkanälen (22,23) für die Radbremszylinder (10) der Antriebsräder (HR,HL) geführt ist, daß zwischen Eingang und Ausgang der Hochdruckpumpe (45) zumindest während der Antriebsschlupfregelung (ASR) ein zum Eingang hin öffnendes Druckbegrenzungsventil (57) angeordnet ist, und daß die Steuerelektronik (30) bei Radschlupf an mindestens einem der Antriebsräder (HR,HL) die Hochdruckpumpe (45) aktiviert und zur Druckeinsteuerung in den Radbremszylinder (10) des schlüpfenden Antriebsrades (HR,HL) einerseits die Magnetventilanordnung (31) und andererseits das dem Auslaßkanal (22,23) für den Radbremszylinder (10) des schlüpfenden Antriebsrades (HR,HL) zugeordnete Steuerventil (26,27) ansteuert.

2. Bremsanlage nach Anspruch 1, dadurch gekennzeichnet, daß ein Umschaltventil (56) mit seinem einen Arbeitsanschluß an dem Eingang der Hochdruckpumpe (45) und mit seinem anderen Arbeitsanschluß an dem Ausgang der Hochdruckpumpe (45) angeschlossen und so ausgebildet ist, daß das Druckbegrenzungsventil (57) in seiner unerregten Grundstellung überbrückt und in seiner erregten Arbeitsstellung wirksam ist.

3. Bremsanlage nach Anspruch 1 oder 2, dadurch gekennzeichnet, daß die Ventilanordnung (31) zwei 2/2-Wegemagnetventile (32,33) aufweist, deren einer Arbeitsanschluß mit dem Ausgang der Hochdruckpumpe (45) und deren anderer Arbeitsanschluß mit je einem Auslaßkanal (22,23) für die Radbremszylinder (10) der Antriebsräder (HR,HL) verbunden ist, daß die 2/2-Wegemagnetventile (32,33) so ausgebildet sind, daß die Arbeitsanschlüsse in der erregten Ventilarbeitsstellung miteinander verbunden und in der unerregten Ventilgrundstellung voneinander getrennt sind, und daß die Steuerelektronik (30) von den beiden 2/2-Wegemagnetventilen (33,34) dasjenige Ventil ansteuert, das dem Auslaßkanal (22 bzw. 23) für den Radbremszylinder (10) des schlüpfenden Antriebsrades (HR bzw. HL) zugeordnet ist.

4. Bremsanlage nach Anspruch 1 oder 2, dadurch gekennzeichnet, daß die Ventilanordnung (31) ein 3/3-Wegemagnetventil (34) aufweist, daß von den Arbeitsanschlüssen des 3/3-Wegemagnetventils (34) der erste Arbeitsanschluß mit der Hochdruckpumpe (45) und der zweite und dritte Arbeitsanschluß mit je einem Auslaßkanal (22,23) für die Radbremszylinder (10) der Antriebsräder (HR,HL) verbunden ist, daß das 3/3-Wegemagnetventil (34) derart ausgebildet ist, daß der erste Arbeitsanschluß in der unerregten Ventilgrundstellung mit dem zweiten Arbeitsanschluß, in der mit Maximalstrom erregten Ventilendstellung mit dem dritten Arbeitsanschluß verbunden und in seiner mit halbem Maximalstrom erregten Mittelstellung von beiden Arbeitsanschlüssen getrennt ist, und daß die Steuerelektronik (30) das 3/3-Wegemagnetventil (34) in eine Schaltstellung überführt, in welcher der Auslaßkanal (22,23) für den Radbremszylinder (10) des schlüpfenden Antriebsrades (HR,HL) an die Hochdruckpumpe (45) angeschlossen ist.

5. Bremsanlage nach Anspruch 4, dadurch gekennzeichnet, daß die Ventilanordnung (31) ein Rückschlagventil (35) aufweist, das mit zur Hochdruckpumpe (45) hin weisender Sperrichtung zwischen dem Ausgang der Hochdruckpumpe und dem ersten Arbeitsanschluß des 3/3-Wegemagnetventils (34) angeordnet ist.

6. Bremsanlage nach einem der Ansprüche 1 - 5, dadurch gekennzeichnet, daß dem Ein- und Ausgang der Hochdruckpumpe (45) ein Pumpeneinlaßventil (55) nach- bzw. vorgeschaltet ist, jeweils in Flußrichtung des Druckmittels gesehen.

Fig. 1

EP 0 442 090 A1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 821 225  (AISIN SEIKI)<br>* Spalte 26, Zeile 53 - Spalte 27, Zeile 49; Figur 5 *<br>– – – | 1,3 | B 60 T 8/48 |
| Y,A | DE-A-3 737 726  (ALFRED TEVES)<br>* Spalte 6, Zeile 22 - Spalte 7, Zeile 67; Figur *<br>– – – | 1,3,2,6 | |
| A | DE-A-3 736 010  (NIPPON ABS)<br>* Spalte 3, Zeile 26 - Spalte 4, Zeile 45; Figur 1 *<br>– – – | 1,6 | |
| A,D | DE-A-3 633 687  (ROBERT BOSCH)<br>* Spalte 8, Zeilen 11 - 37; Figur 3 * * Spalte 9, Zeilen 38 - 50; Figur 8 *<br>– – – | 1 | |
| A,D | DE-A-3 021 116  (ROBERT BOSCH)<br>* Seite 6, Absatz 3 - Seite 10, Absatz 3; Figuren 1, 3 *<br>– – – | 1,2,4 | |
| A | EP-A-0 321 700  (ROBERT BOSCH)<br>* Spalte 8, Zeile 29 - Spalte 9, Zeile 37; Figur 1 *<br>– – – | 1,3,6 | |
| A | EP-A-0 303 019  (ALFRED TEVES)<br>* Spalte 6, Zeile 33 - Spalte 7, Zeile 3; Figur 4 *<br>– – – | 1,6 | RECHERCHIERTE SACHGEBIETE (Int. Cl.5) |
| A | DE-A-3 807 552  (ALFRED TEVES)<br>* Spalte 3, Zeilen 39 - 56 *<br>– – – – – | 1,6 | B 60 T |

Der vorliegende Recherchenbericht wurde für alle Patentansprüche erstellt

| Recherchenort | Abschlußdatum der Recherche | Prüfer |
|---|---|---|
| Den Haag | 22 Mai 91 | MEIJS P.C.J. |